# EUROPEAN PATENT SPECIFICATION

(11) **EP 4 477 064 B1**
(45) Date of publication and mention of the grant of the patent: **04.02.2026**
(21) Application number: 24181588.5
(22) Date of filing: 12.06.2024
(51) Int. Cl.: A01G 9/28

(54) **FLEXIBLE EDGING**
FLEXIBLER RAND
BORD FLEXIBLE

(30) Priority: 12.06.2023 BE 202305481
(43) Date of publication of application: 18.12.2024
(73) Proprietor: Ecco bv, 9820 Merelbeke (BE)
(72) Inventor: Slabbinck, Slabbinck, 9820 Merelbeke (BE)
(74) Representative: Brantsandpatents bv

(56) References cited:
- US-A- 3 387 786
- US-A- 3 788 001
- US-A1- 2003 075 459
- US-A1- 2008 236 035
- US-B1- 6 324 782

## Description

### TECHNICAL FIELD

The present invention relates to a device for separating soil zones and/or landscape areas, preferably for forming edges used as a barrier between adjacent garden, landscape, driveway or patio areas. In another aspect, the invention also relates to a use for separating soil zones and/or landscape areas.

### PRIOR ART

In garden and landscape architecture, so-called edging are increasingly being used to physically separate different soil and/or landscape areas to prevent an area from overflowing or expanding into an adjacent area. For example, it is used as a separation between grass and a flower bed to prevent the grass from taking root in the flower bed, and also to prevent mulch in the flower bed from getting into the grass. For this reason, flexible edging was devised that is placed on site according to the owner's wishes. Thus, modular work can be done, but this does not always produce the desired results. The main problems with the known flexible edgings are that they are insufficiently resistant to various weather conditions, cannot be anchored firmly enough, and are inconvenient to apply, store, and transport.

A traditional edging consists of a strip of material extending in the longitudinal direction with a lower edge that is inserted into the ground to a predetermined depth, and an upper edge that generally protrudes above the ground. The edging is usually installed by digging a narrow trench, inserting the lower edge to a predetermined depth, refilling the trench and compacting the soil around the edging. This is a very time-consuming task and requires some experience because it is very difficult to place it correctly without damaging the edging.

Such an installation normally holds the edging in its intended position for a period of time. However, as time goes on, the environment and other factors actively work against the edging remaining in its original position. The effects of frost heave or freezing and thawing of the earth around the edging, are very detrimental to the edging. For example, serious consequence for the integrity and installation of an edging is the freezing of the ground at and below the level of the edges during the winter months. The soil retains moisture in the fall, which freezes when temperatures drop. Water is one of the few materials with a volume expansion coefficient that increases as the temperature decreases, and the ground correspondingly expands with frozen moisture in the winter. This causes the landscape edging to be compressed, which can cause it to both break and shift. As temperatures rise, the moisture beneath the soil surface melts, changing the composition of the subsoil again. As these seasonal temperature changes alternate, the landscape edging is repeatedly exposed to various forces that, in the long term, cause it to become loose and/or damaged. As the seasons and/or weather conditions alternate, the edging is repeatedly exposed to various forces arising from changing soil volumes that, in the long term, cause the edging to loosen or become damaged.

Such a device is known, inter alia, from US6324782B1, this document describes a system for landscape demarcation consisting of an edge element with a top rail and a barrier extending downwards, and corresponding interconnected or adjacent blocks with recesses in which the top rail is accommodated. This document requires the combination of a block and an edge element to separate adjacent lawns, gardens, paths, driveways or other areas and to counteract any side effects.

There is therefore a need for an improved flexible edging that can be easily anchored, can withstand various weather conditions and can be handled well. Current systems do not allow for practical installation and dismantling of such systems, in addition to often being inadequately anchored. The invention seeks to solve all or more of the problems presented.

### SUMMARY OF THE INVENTION

In a first aspect, the present invention relates to a device according to claim 1.

Preferred forms of the device are presented in claims 2 to 14.

To meet the individual requirements of a user, this optimal edging is very flexible and can take any desired shape expected of an edging. Due to the presence of an upper member and an anchor member, the edging is very easy to install, and sufficiently firmly anchored.

The big advantage of the edging is that the upper member has a convex and concave surface, which means that when rolled up, they fit together optimally and are sturdier and more stable. Rolling up facilitates storage, shipping and it extends the life of the product. This design prevents the rolled up edging from bulging and prevents it from unraveling quickly.

Providing an anchor member ensures that the edging cannot simply be released from the subsurface, consciously or unconsciously. The mentioned edging is therefore ideal for separating various landscapes and/or soil types, for example a lawn, from adjacent garden areas and helps prevent grass from taking root in adjacent garden areas. The edging also helps prevent garden bed material from ending up in the adjacent landscape area.

The edging has optimal stability and resistance to forces, more specifically, the edging can withstand bumps or other external impacts and the edging can also withstand various weather conditions. Therefore, the most common materials used for edging nowadays are plastics. These materials are generally flexible, very strong, and can be easily installed, while also having a longer lifespan, reducing the need for frequent replacement.

In a second aspect the present invention relates to a use according to claim 15. In a garden, for example, an edging can be used as a partition between different areas or as protection against unwanted elements, such as wind or leaves. In addition, it can serve as a decorative feature and give the garden a more attractive appearance.

### DESCRIPTION OF THE FIGURES

**Figure 1** shows a schematic cross-sectional view of an embodiment of the present invention.
**Figure 2** shows a detailed representation of a cross-sectional view of an upper member according to an embodiment of the present invention.
**Figure 3** shows a detailed representation of a cross-sectional view of an anchor member of an embodiment of the present invention.

### DETAILED DESCRIPTION

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The term 'soil zones,' as used in this text, should be understood as defined areas within the soil in which specific characteristics are present, such as texture, composition and organic matter content.

The term 'landscape areas,' as used in this text, should be understood as defined parts of the landscape, with their own distinctive character and unique properties. This can consist of various aspects, such as geology, climate, hydrology, soil, flora and fauna or buildings.

The invention concerns an edging for separating two or more zones, and a use. This concept has applications, inter alia, in the construction of gardens, driveways, flower beds, paths and others. For example, when constructing winding gravel paths in a garden or other, it is desirable to ensure that the gravel is confined to the path and also vice versa, to ensure that soil or other materials do not end up on the path. To meet the individual requirements of a user, the edging must be flexible to take a desired shape, be easy to install, and anchor sufficiently firmly.

In a first aspect, the invention concerns an edging, comprising a barrier strip, an upper member and an anchor member. In particular, the upper member has a first side and an opposite second side, corresponding to a first side and a second side of the barrier strip, wherein the first side has a convex surface and the second side has a concave surface, wherein the convex and concave surfaces are suitable for at least partially fitting into each other when the edging is rolled up. Edgings are often rolled up for shipping, storage and transportation to save space and prevent damage during transportation. Rolls are an efficient and practical way to pack and move edging as they can be easily stored and moved without the need to cut the edging into pieces.

In addition, edging can be rolled and sealed for extra protection against dust, moisture and other environmental factors. This extends the life of the edgings and improves their performance during installation. Rolled up edging is also easier to handle, making it easier to properly store, ship and install the products. An edging that has a concave and an opposite convex surface on opposite sides has a number of practical advantages when rolling up edging. When an edging has a concave surface and a convex surface on an opposite side and is rolled up, the concave and convex shapes will fit together optimally. This makes the rolled up edging sturdier and better stabilized. The roll is better fitted and connected, resulting in less rapid unrolling or bulging, especially during transport and storage. The concave surface of the edging thus makes it possible to roll up the edging without the material bulging. This is because the concave curvature of the concave surface folds the edging in a certain way, causing the material to be in a compact roll without protruding. On the other hand, the convex surface of the edging provides counter pressure, which prevents the edging from unwinding quickly. This keeps the edging tightly rolled, making it easier to transport and store.

According to a preferred embodiment, the edging has a predetermined length, height and width, with a first side and an opposite second side. The dimensions of an edging vary and depend on the project.

The edging preferably has a length depending on the intended project. The length can vary from 1 m to as much as 100 m or even more, and all values in between, but can also be provided with a shorter length. The edging preferably has a length of at least 1 m, preferably at least 5 m, preferably at least 10 m, preferably at least 15 m, preferably at least 20 m, preferably at least 25 m, preferably at least 30 m, preferably at least 35 m, preferably at least 40 m, preferably at least 45 m, preferably at least 50 m, preferably at least 55 m, preferably at least 60 m, preferably at least 65 m, preferably at least 70 m, preferably at least 75 m, preferably at least 80 m, preferably at least 85 m, preferably at least 90 m, preferably at least 95 m, preferably at least 100 m. By adapting the length of the edging to the intended project, it can be better adapted to specific needs and requirements. This makes it possible to use the edging in different ways and to be more flexible in use. This can avoid unnecessary materials and costs and can help to carry out the project on budget and save costs. By adapting the length of the edging to the specific needs, sustainability can also be taken into account. For example, by not using more materials than necessary for the specific project. Preferably, the upper member has a length, wherein the upper member extends over the entire length of the barrier strip.

Preferably, the anchor member also has a length, wherein the anchor member extends over the entire length of the barrier strip.

The edging preferably has a height of at least 50 mm, preferably at least 60 mm, preferably at least 70 mm, preferably at least 80 mm, preferably at least 90 mm, preferably at least 100 mm, preferably at least 110 mm, preferably at least 120 mm, preferably at least 130 mm, preferably at least 140 mm, preferably at least 150 mm, preferably at least 160 mm, preferably at least 170 mm, preferably at least 180 mm, preferably at least 190 mm, preferably at least 200 mm, preferably at least 220 mm, preferably at least 240 mm, preferably at least 260 mm, preferably at least 280 mm, preferably at least 300 mm, preferably at least 350 mm, preferably at least 400 mm, preferably at least 450 mm, preferably at least 500 mm. Although different dimensions may occur depending on the situation. The height can be interpreted as the distance over which the edging extends from the top of the upper member to the bottom of the anchor member. Again, variations in the indicated height are possible depending on the situation and the needs of the user. For example, an edging of the mentioned height is ideal for creating flower borders, pond edges, tree partitions, etc. In practice, an edging is chosen that, when installed, approximately corresponds to or is slightly lower than the height of the adjacent materials so as not to protrude, which can lead to a hazard for users (tripping) and can therefore also lead to unnecessary tensions and forces on the barrier strip, which in turn can result in damage to the edging.

Preferably, the upper member has a height of at least 2 mm, preferably at least 3 mm, preferably at least 4 mm, preferably at least 5 mm, preferably at least 6 mm, preferably at least 7 mm, preferably at least 8 mm, preferably at least 9 mm, preferably at least 10 mm, preferably at least 11 mm.

Preferably, the upper member has a height of at most 50 mm, preferably at most 45 mm, preferably at most 40 mm, preferably at most 35 mm, preferably at most 30 mm, preferably at most 25 mm, preferably at most 20 mm, preferably at most 18 mm, preferably at most 16 mm, preferably at most 14 mm, preferably at most 12 mm.

Even more preferably, the upper member has a height between at least 2 mm and at most 50 mm, even more preferably between at least 3 mm and at most 40 mm, even more preferably between at least 4 mm and at most 30 mm, even more preferably between at least 5 mm and at most 20 mm, even more preferably between at least 6 mm and at most 25 mm, in particular between at least 6 mm and at most 12 mm.

Preferably, the barrier strip has a height of at least 10 mm, preferably at least 50 mm, preferably at least 60 mm, preferably at least 70 mm, preferably at least 80 mm, preferably at least 90 mm, preferably at least 100 mm, preferably at least 150 mm, preferably at least 200 mm, preferably at least 250 mm, preferably at least 300 mm, preferably at least 350 mm, preferably at least 400 mm.

Preferably, the anchor member has a height of at least 6 mm, preferably at least 8 mm, preferably at least 10 mm, preferably at least 12 mm, preferably at least 14 mm, preferably at least 16 mm, preferably at least 18 mm, preferably at least 20 mm.

The anchor member preferably has a height of at most 50 mm, preferably at most 45 mm, preferably at most 40 mm, preferably at most 35 mm, preferably at most 30 mm, preferably at most 25 mm.

Even more preferably, the anchor member has a height between at least 6 mm and at most 50 mm, even more preferably between at least 8 mm and at most 40 mm, even more preferably between at least 10 mm and at most 30 mm, even more preferably between at least 12 mm and at most 20 mm, even more preferably between at least 14 mm and at most 25 mm, in particular between at least 10 mm and at most 16 mm, and even more in particular between at least 12 mm and at most 14 mm.

According to a preferred embodiment, a width of the upper member is equal to a width of the anchor member, and in particular, a maximum width of the upper member is equal to a maximum width of the anchor member. This has a positive impact on the rollability of the edging because it prevents the roll from bulging when rolled up. Preferably, the width of the edging depends on the components mentioned.

Preferably, the upper member has a width of at least 2 mm, preferably at least 3 mm, preferably at least 4 mm, preferably at least 5 mm, preferably at least 6 mm, preferably at least 7 mm, preferably at least 8 mm, preferably at least 9 mm, preferably at least 10 mm, preferably at least 11 mm.

Preferably, the upper member has a width of at most 50 mm, preferably at most 45 mm, preferably at most 40 mm, preferably at most 35 mm, preferably at most 30 mm, preferably at most 25 mm, preferably at most 20 mm, preferably at most 18 mm, preferably at most 16 mm, preferably at most 14 mm, preferably at most 12 mm.

Even more preferably, the upper member has a width between at least 2 mm and at most 50 mm, even more preferably between at least 3 mm and at most 40 mm, even more preferably between at least 4 mm and at most 30 mm, even more preferably between at least 5 mm and at most 20 mm, even more preferably between at least 6 mm and at most 25 mm, in particular between at least 6 and at most 12 mm. For the width of the upper member, the distance between opposite sides at the same height must be taken into account. The width refers to the distance between opposite sides at the same position along the height of the edging.

Preferably, the barrier strip has a width of at least 1.0 mm, preferably at least 1.5 mm, preferably at least 2.0 mm, preferably at least 2.5 mm, preferably at least 3.0 mm, preferably at least 3.5 mm, preferably at least 4.0 mm, preferably at least 4.5 mm, preferably at least 5.5 mm.

Preferably, the barrier strip has a width of at most 30 mm, preferably at most 25 mm, preferably at most 20 mm, preferably at most 15 mm, preferably at most 10 mm, preferably at most 9 mm, preferably at most 8 mm, preferably at most 7 mm, preferably at most 6 mm.

Even more preferably, the barrier strip has a width between at least 1.0 mm and at most 30 mm, even more preferably between at least 1.5 mm and at most 25 mm, even more preferably between at least 2.0 mm and at most 20 mm, even more preferably between at least 2.5 mm and at most 15 mm, even more preferably between at least 3.0 mm and at most 10 mm, in particular between at least 3 mm and at most 6 mm.

Preferably, the anchor member has a width of at least 2 mm, preferably at least 3 mm, preferably at least 4 mm, preferably at least 5 mm, preferably at least 6 mm, preferably at least 7 mm, preferably at least 8 mm, preferably at least 9 mm, preferably at least 10 mm, preferably at least 11 mm.

Preferably, the anchor member has a width of at most 50 mm, preferably at most 45 mm, preferably at most 40 mm, preferably at most 35 mm, preferably at most 30 mm, preferably at most 25 mm, preferably at most 20 mm, preferably at most 18 mm, preferably at most 16 mm, preferably at most 14 mm, preferably at most 12 mm. Even more preferably, the anchor member has a width between at least 2 mm and at most 50 mm, even more preferably between at least 3 mm and at most 40 mm, even more preferably between at least 4 mm and at most 30 mm, even more preferably between at least 5 mm and at most 20 mm, even more preferably between at least 6 mm and at most 25 mm, in particular between at least 6 and at most 12 mm.

According to a preferred embodiment, a curvature of the convex surface is similar in shape to a curvature of the concave surface. With a concave surface the curvature is directed inwards, where the radii of curvature are directed away from the surface. With a convex surface the curvature is directed outwards, where the radii of curvature are directed towards the surface. It should be understood that the radius of curvature may also depend in part on the overall dimensions and the precise context in which the edging would be used. Because the curvature of the convex surface is similar in shape to the curvature of the concave surface, when the edging is rolled up, both parts will fit together nicely and where the outer layers of the roll will fix the more inner layers. The result is an optimally rolled edging that will not bulge.

According to a preferred embodiment, the convex and concave surface extends in the longitudinal direction, and preferably has a constant profile over the longitudinal direction. This ensures that rolling up is always possible and production is simplified. Most preferably, the convex surface and the concave surface are similar in shape to each other and complementary, and this is so over the entire length of the edging.

According to a preferred embodiment, the curvature of the convex surface and the curvature of the concave surface comprise a substantially similar radius of curvature, wherein the radius of curvature is at least 0.2, preferably at least 0.4 mm, preferably at least 0.6, preferably at least 0.8 mm, preferably at least 1.0 mm, preferably at least 1.2 mm, preferably at least 1.4 mm, preferably at least 1.6 mm, preferably at least 1.8 mm, preferably at least 2.0 mm, preferably at least 2.2 mm, preferably 2.4 mm, preferably at least 2.6 mm, preferably at least 2.8 mm, preferably at least 3.0 mm, preferably at least 3.2 mm, preferably at least 3.4 mm, preferably at least 3.6 mm, preferably at least 3.8 mm, preferably at least 4.0 mm, preferably at least 4.2 mm, preferably at least 4.4 mm, preferably at least 4.6 mm, preferably at least 4.8 mm.

The radius of curvature is preferably at most 5.0 mm, preferably at most 5.2 mm, preferably at most 5.4 mm, preferably at most 5.6 mm, preferably at most 5.8 mm, preferably at most 6.0 mm, preferably at most 6.2 mm, preferably at most 6.4 mm, preferably at most 6.6 mm, preferably at most 6.8 mm, preferably at most 7.0 mm, preferably at most 7.2 mm, preferably at most 7.4 mm, preferably at most 7.6 mm, preferably at most 7.8 mm, preferably at most 8.0 mm, preferably at most 8.2 mm, preferably at most 8.4 mm, preferably at most 8.6 mm, preferably at most 8.8 mm, preferably at most 9.0 mm, preferably at most 10 mm, preferably at most 15 mm, preferably at most 20 mm, preferably at most 25 mm, preferably at most 30 mm.

Even more preferably, the radius of curvature is at least 0.2 mm and at most 30 mm, even more preferably at least 0.4 mm and at most 25 mm, even more preferably at least 0.6 mm and at most 20 mm, even more preferably at least 0.6 mm and at most 20 mm, even more preferably at least 0.8 mm and at most 15 mm, even more preferably at least 1.0 mm and at most 10 mm, even more preferably at least 1.2 mm and at most 9.0 mm, even more preferably at least 1.4 mm and at most 8.8 mm, even more preferably at least 1.6 mm and at most 8.6 mm, even more preferably at least 1.8 mm and at most 8.4 mm, even more preferably at least 2.0 mm and at most 8.2 mm, even more preferably at least 2.2 mm and at most 8.2 mm, even more preferably at least 2.4 mm and at most 8.0 mm, even more preferably at least 2.6 mm and at most 7.8 mm, even more preferably at least 2.8 mm and at most 7.6 mm, even more preferably at least 3.0 mm and at most 7.4 mm, even more preferably at least 3.2 mm and at most 7.2 mm, even more preferably at least 3.4 mm and at most 7.0 mm, in particular the radius of curvature is at least 0.2 mm and at most 5 mm. A curvature can be described by a radius of curvature. The radius of curvature is the distance from the center of the arc to any point on the arc. This indicates the degree of bending of the arc and therefore determines the curvature. So the larger the radius of curvature, the less the curvature and the smaller the radius of curvature, the greater the curvature. This optimal curvature guarantees that the rolled edging will not bulge. It ensures optimal stiffness of the edging, which means that the edging is both easy to roll up and functionally excellent.

According to a preferred embodiment, the upper member has a flat top. This is a great advantage when placing the edging in a substrate, because it makes a simpler and more efficient process. The flat top provides a larger surface area to strike with a hammer or other fasteners, allowing the edging to be firmly and securely anchored into the ground.

According to a preferred embodiment, the upper member projects laterally outward from the first and second sides of the barrier strip. This unique configuration leads to an improvement in the rollability of the edging.

According to a preferred embodiment, the upper member is hollow along its length, thereby forming a cavity in the upper member. This design choice serves as a material saving and aims to reduce production and material costs without sacrificing the functionality and strength of the edging. In addition, the cavity can contribute to increased flexibility and mobility of the edging, which contributes to an easier and faster installation process. Preferably, the cavity is similar in shape to the shape of the upper member itself. Alternatively, the cavity can also have any other shape, such as circular, rectangular, square, oval, triangular, cylindrical, conical and the like.

According to a preferred embodiment, the anchor member extends longitudinally along the lower portion of the barrier strip over its entire length, wherein the anchor member is suitable for being inserted into the ground. The anchor member is designed to be inserted into the ground and offers several advantages, such as improving stability and grip on the ground, making the edging more secure. As a result, the edging will move less quickly or fall over, which will lead to increased safety and optimal separation of two landscapes and/or soil zones.

According to a preferred embodiment, the anchor member has a cross-section that is arrow-shaped, wherein a base of the arrow-shaped anchor member is adjacent to the barrier strip and a tip of the arrow-shaped anchor member extends further downwards.

According to a further preferred embodiment, the anchor member projects laterally outward from the first and second sides of the barrier strip. Another advantageous feature thus lies in the anchor member, which in the preferred embodiment has the shape of a, preferably hollow, arrow extending along the lower edge of the barrier strip. The arrow is positioned symmetrically in cross-section with respect to the barrier strip, such that equal portions project laterally from opposite faces of the barrier strip. Two of the sides of the arrow meet at a downwardly projecting central point, forming the arrowhead which extends directly below the barrier strip. A trench can be dug for the installation of the edging, wherein the edging is inserted into the trench with the anchor member pointing downwards, in other words with the tip of the arrow-shaped anchor member pointing downwards. As the trench is refilled and compacted around the edging body, it surrounds at least the anchor member, and preferably also part of the barrier strip. The laterally projecting portions of the anchor member resist upward movement of the edging, especially during winter subsurface freezing, and the symmetry of the protruding portion resists lateral movement. As such, the edging is strongly anchored, maintaining structural integrity and remaining stationary for extended periods of time. A person skilled in the art will understand that these shapes are just a few of the many different shapes that the anchor member can take, one of the many further possibilities is, for example, a triangular anchor member.

According to a preferred embodiment, the anchor member is hollow along its length, thereby forming a cavity in the anchor member. On the one hand, the cavity of the anchor member also has the advantage of requiring less material, which aims to reduce production and material costs. On the other hand, the cavity will also ensure simplified installation due to the lower weight.

According to a further preferred embodiment, the cavity in the anchor member is substantially similar in shape to the anchor member itself. This arrow-shaped recess will ensure that the tip of the anchor member will be sharpened during the placement of the edging making it quicker and more efficient to install.

In addition, a hollow anchor member also offers the possibility for the anchor member to change shape under the influence of the ground over time. As indicated, in the event of frost, changing soil moisture and/or other external factors, a variable pressure or force can be exerted on the anchor member. Because this anchor member is hollow and deformable, it can respond to this and deform, so that it cannot be pushed upwards (and out of the earth) or damaged.

According to a preferred embodiment, a width of the cavity of the upper member and/or a width of the cavity of the anchor member is greater than 1.0 mm, preferably greater than 1.5 mm, preferably greater than 2.0 mm, preferably greater than 2.5 mm, preferably greater than 3.0 mm, preferably greater than 3.5 mm, preferably greater than 4.0 mm, preferably greater than 4.5 mm, preferably greater than 5.0 mm, preferably greater than 5.5 mm, preferably greater than 6.0 mm, preferably greater than 6.5 mm, preferably greater than 7.0 mm, preferably greater than 7.5 mm, preferably greater than 8.0 mm, preferably greater than 8.5 mm, preferably greater than 9.0 mm, preferably greater than 9.5 mm, preferably greater than 10.0 mm, preferably greater than 15 mm, preferably greater than 20 mm, preferably greater than 25 mm, preferably greater than 30 mm.

According to a preferred embodiment, the cavity of the upper member has a height that is preferably greater than 1.0 mm, preferably greater than 1.5 mm, preferably greater than 2.0 mm, preferably greater than 2.5 mm, preferably greater than 3.0 mm, preferably greater than 3.5 mm, preferably greater than 4.0 mm, preferably greater than 4.5 mm, preferably greater than 5.0 mm, preferably greater than 5.5 mm, preferably greater than 6.0 mm, preferably greater than 6.5 mm, preferably greater than 7.0 mm, preferably greater than 7.5 mm, preferably greater than 8.0 mm, preferably greater than 8.5 mm, preferably greater than 9.0 mm, preferably greater than 9.5 mm, preferably greater than 10 mm, preferably greater than 15 mm, preferably greater than 20 mm, preferably greater than 25 mm, preferably greater than 30 mm.

According to a preferred embodiment, the cavity of the anchor member has a height that is preferably greater than 3.0 mm, preferably greater than 3.5 mm, preferably greater than 4.0 mm, preferably greater than 4.5 mm, preferably greater than 5.0 mm, preferably greater than 5.5 mm, preferably greater than 6.0 mm, preferably greater than 6.5 mm, preferably greater than 7.0 mm, preferably greater than 7.5 mm, preferably greater than 8.0 mm, preferably greater than 8.5 mm, preferably greater than 9.0 mm, preferably greater than 9.5 mm, preferably greater than 10 mm, preferably greater than 15 mm, preferably greater than 20 mm, preferably greater than 25 mm, preferably greater than 30 mm, preferably greater than 35 mm, preferably larger than 40 mm.

According to an alternative and/or further preferred embodiment, the barrier strip and/or the anchor member comprises one or more anchoring elements. Possible anchoring elements include pins, nuts, screws, plugs, and may be provided with threads, barbs, bayonet fittings or others. In these ways, edgings can be easily and reliably anchored in the ground. The barrier strip can, among other things, comprise one or more, for example at least 3, at least 4, at least 5, at least 6 or more, bulges as anchoring elements. In this way, the bulges hinder rotation of the edging in the ground. The bulges can be blocks, cylinders, prisms or other shapes. The bulges can be provided on a first side of the barrier strip, on a second side of the barrier strip or on the first and second sides of the barrier strip in order to be able to anchor themselves in a substrate during installation.

According to a preferred embodiment, the edging is made from polyvinyl chloride (PVC), preferably from recycled PVC. To meet the individual requirements of a user, the edging must be flexible (in particular allowing for longitudinal curvature) to take a desired shape, be easy to install, and anchor sufficiently firmly. In the past, the edging was formed from pieces of wood, corrugated metal strips, plastic, cement blocks or poured concrete. Wood is subject to rot and insect attack and decays over time. Wooden landscape beams therefore need to be replaced quite often. Ungalvanized metal bands oxidize and rust and tend to bend and become deformed over time. Even galvanized metal bands will eventually corrode once the protective zinc layer has oxidized. Concrete blocks are inflexible, difficult to install and generally heavy. Poured concrete is expensive, difficult or impossible to adjust once poured and cured, and difficult and time-consuming to install. Due to the disadvantages inherent to wood, metal and concrete edging and the unique advantages of PVC, PVC edging is the preferred material. PVC is a strong and wear-resistant material that is resistant to weather influences, corrosion and cracking. This means that the edging has a longer lifespan and requires less maintenance. PVC is a flexible material, which means that it easily adapts to the shapes and movements of the surface. This makes it a very suitable material for edging applications. When PVC is made from recycled material, it is better for the environment than when it is made from new raw materials. The use of recycled PVC limits the production of waste and thus saves raw materials and energy.

According to an alternative embodiment, the edging is made from any type of plastic, for example from Acrylonitrile butadiene styrene, Polypropylene, Polyethylene, Celluloid, Polysulfone, Polystyrene, Cellulose acetate and the like.

In a second aspect, the invention concerns a use of the device according to the first aspect of the invention for separating soil zones and/or landscape areas. In a garden, for example, an edging can be used as a partition between different areas or as protection against unwanted elements, such as wind or leaves. In addition, it can serve as a decorative feature and give the garden a more attractive appearance.

In what follows, the invention is described by way of non-limiting figures illustrating the invention, and which are not intended to and should not be interpreted as limiting the scope of the invention.

### DESCRIPTION OF THE FIGURES

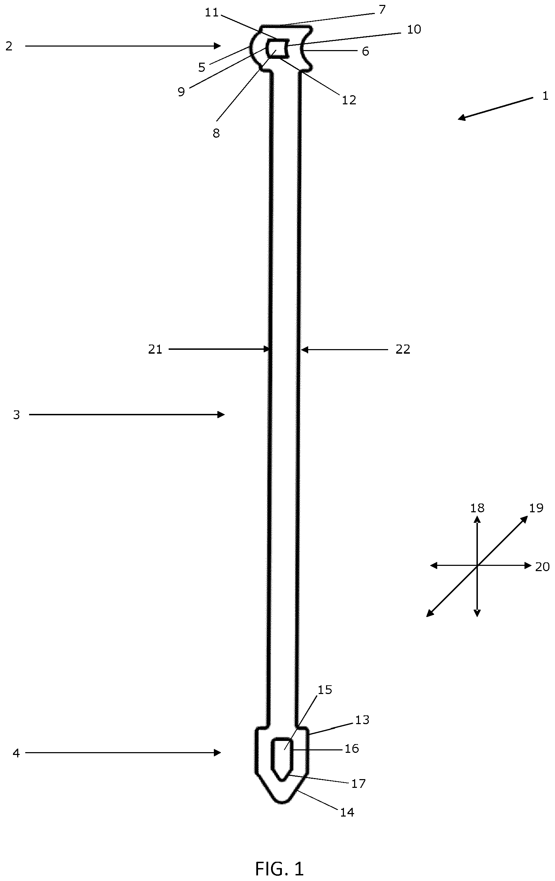

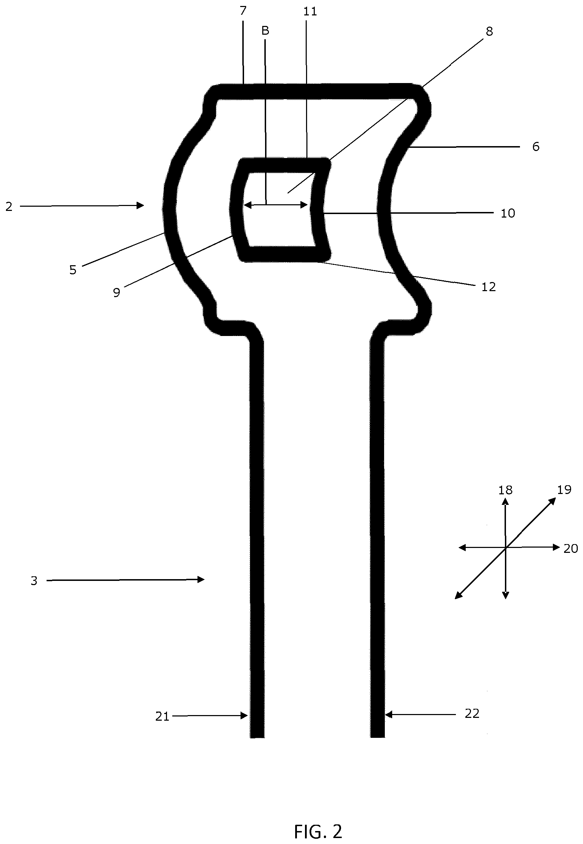

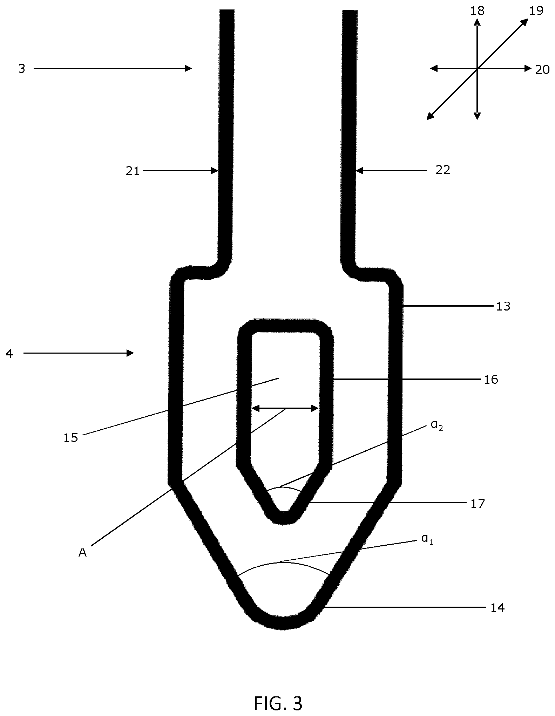

Figures 1, 2 and 3 show a cross-section of an edging.

The edging 1 comprises an upper member 2, a barrier strip 3 and an anchor member 4. The direction is also clearly indicated on these figures, the edging has a height 18, a length 19 and a width 20. Furthermore, the edging comprises a first side 21 and a second side 22, meaning that each sub-structure (in other words, the upper member, the barrier strip and the anchor member) also includes the same sides.

The upper member 2 is provided undetachably on the upper portion of the barrier strip 3. The upper member has a convex surface 5 along the first side 21 and a concave surface 6 along the second side 22. Furthermore, the upper member also has a flat top 7. The upper member is thicker than the barrier strip, causing the upper member to project laterally outward from the first and second sides of the barrier strip 3. Preferably the upper member has a width between 6 mm and 12 mm. The barrier strip 3 preferably has a width between 3 mm and 6 mm. The upper member will extend over the entire length of the barrier strip 3, wherein the upper member 2 is hollow along its length, thereby obtaining a cavity from the upper member 8. Preferably, the cavity of the upper member 8 is similar in shape to the shape of the upper member 2 itself. This means that the cavity of the upper member 8 comprises at least a convex wall 9, a concave wall 10. Furthermore, the cavity of the upper member 8 also comprises a flat upper wall 11 and a flat lower wall 12. Furthermore, the upper member 2 preferably has a height between 6 mm and 12 mm, and the cavity of the upper member 2 has a height between 2 mm and 4 mm.

The barrier strip 3 preferably has an elongated strip shape and will have a height preferably between 100 mm and 200 mm, but more preferably at least greater than 50 mm, and more preferably the barrier strip can also have a height greater than 200 mm. As mentioned above, the width of the barrier strip will preferably be between 3 mm and 6 mm.

In this cross-section the anchor member 4 is arrow-shaped wherein a base 13 of the arrow-shaped anchor member is provided undetachably on the lower portion of the barrier strip 3. The arrow-shaped anchor member 4 will extend further downwards. The arrow-shaped anchor member 4 ends in a point 14. The anchor member 4 has a length, wherein the anchor member 4 extends over the entire length of the barrier strip 4, wherein the anchor member 4 is hollow along its length, thereby forming a cavity 15 in the anchor member 4. Characteristically, this cavity 15 is substantially similar in shape to the anchor member 4 itself. As a result, the cavity of the anchor member 15 also obtains a base 16 and a point 17. Notice that the angle α₁ made by the tip of the anchor member 4 is equal to the angle α₂ of the tip of the cavity of the anchor member 15. Preferably, these angles are between 50° and 70°. The base 13 of the anchor member will preferably have a height between 6 mm and 12 mm and the height of the anchor member 4 as a whole (base 13 and point 14 together) is preferably between 10 mm and 17 mm. The anchor member 4 is thicker than the barrier strip, causing the anchor member 4 to project laterally outward from the first and second sides of the barrier strip 3. Preferably the anchor member has a width between 6 mm and 12 mm. The barrier strip 3 preferably has a width between 3 mm and 6 mm, as mentioned above.
1= edging
2= upper member
3= barrier strip
4= anchor member
5= convex surface upper member
6= concave surface upper member
7= flat top upper member
8= cavity upper member
9= convex wall cavity upper member
10= concave wall cavity upper member
11= flat upper wall cavity upper member
12= flat lower wall cavity upper member
13= base of the anchor member
14= point of the anchor member
15= cavity anchor member
16= basic arrow shape of the cavity of the anchor member
17= point arrow shape of the cavity of the anchor member
18= height
19= length
20= width
21= first side
22= second side
A= width of the cavity of the anchor member
B= width of the cavity of the upper member
α₁ = angle of the tip of the anchor member
α₂ = angle of the tip of the cavity of the anchor member

## Claims

1. Edging (1), comprising:
- a barrier strip (3) of predetermined length, height and width, extending along a longitudinal direction, having an upper portion and a lower portion, and having a first side and an opposite second side;
- an upper member (2) extending longitudinally along the upper portion of the barrier strip;
- an anchor member (4) extending lengthwise along the lower portion of the barrier strip, wherein the anchor member (4) is suitable for being inserted into the ground;
**characterized in that** the upper member (2) has a first side and an opposite second side, corresponding to the first side and the second side of the barrier strip, wherein the first side has a convex surface (5) and the second side has a concave surface (6), wherein the convex and concave surfaces (5,6) are suitable for at least partially fitting into each other when the edging is rolled up.

2. The edging according to claim 1, **characterized in that** a curvature of the convex surface is similar to a curvature of the concave surface.

3. The edging according to claim 2, **characterized in that** the curvature of the convex surface and the curvature of the concave surface have a substantially similar radius of curvature, wherein the radius of curvature is between at least 0.2 mm and at most 5 mm.

4. The edging according to claims 1 to 3, **characterized in that** the upper member has a flat top.

5. The edging according to any of the preceding claims 1 to 4, **characterized in that** the upper member has a length, wherein the upper member extends over the entire length of the barrier strip, wherein the upper member is hollow along its length, thereby forming a cavity in the upper member.

6. The edging according to any of the preceding claims 1 to 5, **characterized in that** the upper member projects laterally outward from the first and second sides of the barrier strip.

7. The edging according to claim 1, **characterized in that** the anchor member has an arrow-shaped cross-section, wherein a base of the arrow-shaped anchor member is adjacent to the barrier strip and the arrow-shaped anchor member extends further downwards, ending in a point.

8. The edging according to any of the preceding claims 1 or 7, **characterized in that** the anchor member has a length, wherein the anchor member extends over the entire length of the barrier strip, wherein the anchor member is hollow along its length, thereby forming a cavity in the anchor member.

9. The edging according to the preceding claim 8, **characterized in that** the cavity in the anchor member is substantially similar in shape to the anchor member itself.

10. The edging according to claim 8 or 9, **characterized in that** a width of the cavity of the upper member and/or a width of the cavity of the anchor member is greater than 2 mm.

11. The edging according to any of the preceding claims 1 to 10, **characterized in that** the anchor member projects laterally outward from the first and second sides of the barrier strip.

12. The edging according to any of the preceding claims 1 to 11, **characterized in that** a width of the upper member is equal to a width of the anchor member, wherein said widths are greater than 6 mm.

13. The edging according to any of the preceding claims 1 to 12, **characterized in that** the edging is made from polyvinyl chloride, preferably from recycled polyvinyl chloride.

14. The edging according to any of the preceding claims 1 to 13, wherein the convex and concave surface extends in the longitudinal direction, and preferably has a constant profile over the longitudinal direction.

15. Use of the edging according to any one of claims 1 to 14 for separating soil zones and/or landscape areas.

## Patentansprüche

1. Einfassung (1), Folgendes umfassend:
- einen Sperrstreifen (3) mit festgelegter Länge, Höhe und Breite, der sich entlang einer Längsrichtung erstreckt, einen oberen Abschnitt und einen unteren Abschnitt aufweist sowie eine erste Seite und eine gegenüberliegende zweite Seite aufweist,
- ein oberes Element (2), das sich längs entlang des oberen Abschnitts des Sperrstreifens erstreckt,
- ein Ankerelement (4), das sich längs entlang des unteren Abschnitts des Sperrstreifens erstreckt, wobei das Ankerelement (4) zum Einsetzen in den Boden geeignet ist,
**dadurch gekennzeichnet, dass** das obere Element (2) eine erste Seite und eine gegenüberliegende zweite Seite aufweist, die der ersten Seiten und der zweiten Seite des Sperrstreifens entsprechen, wobei die erste Seite eine konvexe Oberfläche (5) und die zweite Seite eine konkave Oberfläche (6) aufweist, wobei die konvexe und die konkave Oberfläche (5, 6) dazu geeignet sind, zumindest teilweise ineinander zu passen, wenn die Einfassung aufgerollt ist.

2. Einfassung nach Anspruch 1, **dadurch gekennzeichnet, dass** eine Krümmung der konvexen Oberfläche gleich einer Krümmung der konkaven Oberfläche ist.

3. Einfassung nach Anspruch 2, **dadurch gekennzeichnet, dass** die Krümmung der konvexen Oberfläche und die Krümmung der konkaven Oberfläche einen im Wesentlichen gleichen Krümmungsradius aufweisen, wobei der Krümmungsradius zwischen mindestens 0,2 mm und höchstens 5 mm liegt.

4. Einfassung nach den Ansprüchen 1 bis 3, **dadurch gekennzeichnet, dass** das obere Element eine flache Oberseite aufweist.

5. Einfassung nach einem der vorhergehenden Ansprüche 1 bis 4, **dadurch gekennzeichnet, dass** das obere Element eine Länge aufweist, wobei sich das obere Element über die gesamte Länge des Sperrstreifens erstreckt, wobei das obere Element entlang seiner Länge hohl ist, wodurch in dem oberen Element ein Hohlraum gebildet ist.

6. Einfassung nach einem der vorhergehenden Ansprüche 1 bis 5, **dadurch gekennzeichnet, dass** das obere Element seitlich aus der ersten und der zweiten Seite des Sperrstreifens heraussteht.

7. Einfassung nach Anspruch 1, **dadurch gekennzeichnet, dass** das Ankerelement einen pfeilförmigen Querschnitt aufweist, wobei eine Basis des pfeilförmigen Ankerelements an den Sperrstreifen angrenzt und sich das pfeilförmige Ankerelement weiter nach unten erstreckt und in einer Spitze endet.

8. Einfassung nach einem der vorhergehenden Ansprüche 1 bis 7, **dadurch gekennzeichnet, dass** das Ankerelement eine Länge aufweist, wobei sich das Ankerelement über die gesamte Länge des Sperrstreifens erstreckt, wobei das Ankerelement entlang seiner Länge hohl ist, wodurch in dem Ankerelement ein Hohlraum gebildet ist.

9. Einfassung nach Anspruch 8, **dadurch gekennzeichnet, dass** der Hohlraum in dem Ankerelement eine im Wesentlichen ähnliche Form aufweist wie das Ankerelement selbst.

10. Einfassung nach Anspruch 8 oder 9, **dadurch gekennzeichnet, dass** eine Breite des Hohlraums des oberen Elements und/oder eine Breite des Hohlraums des Ankerelements größer als 2 mm ist.

11. Einfassung nach einem der vorhergehenden Ansprüche 1 bis 10, **dadurch gekennzeichnet, dass** das Ankerelement seitlich aus der ersten und der zweiten Seite des Sperrstreifens heraussteht.

12. Einfassung nach einem der vorhergehenden Ansprüche 1 bis 11, **dadurch gekennzeichnet, dass** eine Breite des oberen Elements gleich einer Breite des Ankerelements ist, wobei die Breiten größer als 6 mm sind.

13. Einfassung nach einem der vorhergehenden Ansprüche 1 bis 12, **dadurch gekennzeichnet, dass** die Einfassung aus Polyvinylchlorid besteht, vorzugsweise aus recyceltem Polyvinylchlorid.

14. Einfassung nach einem der vorhergehenden Ansprüche 1 bis 13, wobei sich die konvexe und die konkave Oberfläche in der Längsrichtung erstrecken und vorzugsweise ein konstantes Profil über die Längenrichtung aufweisen.

15. Verwendung der Einfassung nach einem der vorhergehenden Ansprüche 1 bis 14 zum Trennen von Bodenzonen und/oder Landschaftsgebieten.

## Revendications

1. Bordure (1), comprenant :
- une bande barrière (3) de longueur, de hauteur et de largeur prédéterminées, s'étendant dans une direction longitudinale, ayant une partie supérieure et une partie inférieure, et ayant un premier côté et un second côté opposé ;
- un élément supérieur (2) s'étendant longitudinalement le long de la partie supérieure de la bande barrière ;
- un élément d'ancrage (4) s'étendant longitudinalement le long de la partie inférieure de la bande de barrière, dans lequel l'élément d'ancrage (4) est adapté pour être inséré dans le sol ;
**caractérisé en ce que** l'élément supérieur (2) a un premier côté et un second côté opposé, correspondant au premier côté et au second côté de la bande barrière, le premier côté ayant une surface convexe (5) et le second côté ayant une surface concave (6), les surfaces convexes et concaves (5,6) étant adaptées pour s'emboîter au moins partiellement l'une dans l'autre lorsque le bord est enroulé.

2. Le bord selon la revendication 1, **caractérisé en ce que** la courbure de la surface convexe est semblable à la courbure de la surface concave.

3. Le bord selon la revendication 2, **caractérisé en ce que** la courbure de la surface convexe et la courbure de la surface concave ont un rayon de courbure sensiblement similaire, le rayon de courbure étant compris entre au moins 0,2 mm et au plus 5 mm.

4. Le bord selon les revendications 1 à 3, **caractérisé en ce que** l'élément supérieur a un dessus plat.

5. Le bord selon l'une quelconque des revendications précédentes 1 à 4, **caractérisé en ce que** l'élément supérieur a une longueur, dans laquelle l'élément supérieur s'étend sur toute la longueur de la bande barrière, dans lequel l'élément supérieur est creux sur toute sa longueur, formant ainsi une cavité dans l'élément supérieur.

6. Le bord selon l'une quelconque des revendications précédentes 1 à 5, **caractérisé en ce que** l'élément supérieur fait saillie latéralement vers l'extérieur à partir du premier et du deuxième côté de la bande de barrière.

7. Le bord selon la revendication 1, **caractérisé en ce que** l'élément d'ancrage a une section transversale en forme de flèche, dans laquelle une base de l'élément d'ancrage en forme de flèche est adjacente à la bande de barrière et l'élément d'ancrage en forme de flèche s'étend plus bas, se terminant par une pointe.

8. Le bord selon l'une quelconque des revendications précédentes 1 ou 7, **caractérisé en ce que** l'élément d'ancrage a une longueur, dans laquelle l'élément d'ancrage s'étend sur toute la longueur de la bande barrière, dans laquelle l'élément d'ancrage est creux sur toute sa longueur, formant ainsi une cavité dans l'élément d'ancrage.

9. Le bord selon la revendication 8 précédente, **caractérisé en ce que** la cavité dans l'élément d'ancrage a une forme sensiblement similaire à celle de l'élément d'ancrage lui-même.

10. Le bord selon la revendication 8 ou 9, **caractérisé en ce que** la largeur de la cavité de l'élément supérieur et/ou la largeur de la cavité de l'élément d'ancrage est supérieure à 2 mm.

11. Le bord selon l'une quelconque des revendications précédentes 1 à 10, **caractérisé en ce que** l'élément d'ancrage se projette latéralement vers l'extérieur à partir du premier et du deuxième côté de la bande de barrière.

12. Le bord selon l'une quelconque des revendications précédentes 1 à 11, **caractérisé en ce que** la largeur de l'élément supérieur est égale à la largeur de l'élément d'ancrage, lesdites largeurs étant supérieures à 6 mm.

13. Le bord selon l'une quelconque des revendications précédentes 1 à 12, **caractérisé en ce que** le bord est fabriqué à partir de polychlorure de vinyle, de préférence à partir de polychlorure de vinyle recyclé.

14. Le bord selon l'une quelconque des revendications précédentes 1 à 13, dans lequel la surface convexe et concave s'étend dans la direction longitudinale et présente de préférence un profil constant dans la direction longitudinale.

15. Utilisation de la bordure selon l'une quelconque des revendications 1 à 14 pour séparer les zones de sol et/ou les zones paysagères.
